# EUROPÄISCHE PATENTANMELDUNG

(11) **EP 4 095 968 A1**
(43) Veröffentlichungstag der Anmeldung: **30.11.2022**
(21) Anmeldenummer: 22174816.3
(22) Anmeldetag: 23.05.2022
(51) Int. Cl.: H01M 10/04, B60L 50/64, H01M 10/625, H01M 10/6554, H01M 10/6555

(54) **BATTERIEMODUL FÜR EINE TRAKTIONSBATTERIE EINES ELEKTROFAHRZEUGS, TRAKTIONSBATTERIE FÜR EIN ELEKTROFAHRZEUG UND VERFAHREN ZUM HERSTELLEN EINER TRAKTIONSBATTERIE**

(30) Priorität: 25.05.2021 DE 102021113418
(71) Anmelder: Lisa Dräxlmaier GmbH, 84137 Vilsbiburg (DE)
(72) Erfinder: Bardosch, Benjamin, 84028 Landshut (DE); Flieser, Michael, 84144 Geisenhausen (DE); Hahn, Alexander, 91341 Röttenbach (DE); Magunia, Robert, 84144 Geisenhausen (DE); Sperl, Thomas, 94405 Landau a. d. Isar (DE); Wagner, Peter, 85757 Karlsfeld (DE)

(57) **Zusammenfassung**

Die vorliegende Erfindung bezieht sich auf ein Batteriemodul (102) für eine Traktionsbatterie (100) eines Elektrofahrzeugs, wobei das Batteriemodul (102) zumindest ein zwischen zwei Zellen (106) des Batteriemoduls (102) angeordnetes Wärmeleitblech (112) aufweist, wobei ein Zentralbereich (109) des Wärmeleitblechs (112) in einem Zwischenraum zwischen den Zellen (106) entlang einer Haupterstreckungsebene des Wärmeleitblechs (112) verläuft und ein außerhalb des Zwischenraums angeordneter Endbereich (110) des Wärmeleitblechs (112) quer zu der Haupterstreckungsebene ausgerichtet ist und eine verformbare Wärmeübertragungsfläche (108) des Batteriemoduls (102) ausbildet, wobei der Endbereich (110) in einem spitzen Winkel zu einer senkrecht zu der Haupterstreckungsebene verlaufenden Bezugsebene der Wärmeübertragungsfläche (108) ausgerichtet ist.

## Beschreibung

### Technisches Gebiet

Die vorliegende Erfindung betrifft ein Batteriemodul für eine Traktionsbatterie eines Elektrofahrzeugs, eine Traktionsbatterie für ein Elektrofahrzeug und ein Verfahren zum Herstellen einer solchen Traktionsbatterie.

### Stand der Technik

Die vorliegende Erfindung wird im Folgenden hauptsächlich in Verbindung mit Traktionsbatterien für Elektrofahrzeuge beschrieben. Die Erfindung kann aber in jedem Akkumulator genutzt werden, in welchem große Wärmemengen zu- oder abgeführt werden sollen.

Eine Traktionsbatterie eines Elektrofahrzeugs ist dazu konfiguriert, elektrische Energie zum Antreiben des Elektrofahrzeugs mit KFZ-Hochvoltspannung zu bevorraten, während des Betriebs für Beschleunigungsvorgänge mit hohen Stromstärken entladen zu werden und für elektrische Bremsvorgänge mit hohen Stromstärken geladen zu werden. Durch die hohen Stromstärken entstehen thermische Verluste, die als Wärme abzuführen sind, um eine Temperatur der Traktionsbatterie innerhalb eines vorgesehenen Betriebsbereichs zu halten. Dazu kann die Traktionsbatterie eine Temperiereinrichtung aufweisen. In der Temperiereinrichtung kann beispielsweise eine Flüssigkeit zum Abtransport der Wärme verwendet werden. Die Temperiereinrichtung kann der Traktionsbatterie auch Wärme zuführen, wenn die Temperatur unterhalb des Betriebsbereichs liegt.

Die Temperiereinrichtung kann beispielsweise als Kühlplatte ausgeführt sein. Wärmeübertragungsflächen von Batteriemodulen der Traktionsbatterie können unter Verwendung von Gap Filler, einem pastösen Wärmeleitmaterial, thermisch mit der Temperiereinrichtung gekoppelt werden. Der Gap Filler wird zwischen die Wärmeübertragungsflächen und die Temperiereinrichtung dosiert. Die Batteriemodule werden in den Gap Filler gedrückt. Dabei verteilt sich der Gap Filler zwischen den Wärmeübertragungsflächen und der Temperiereinrichtung. Hohlräume oder Spalte von Oberflächen der Temperiereinrichtung und der Wärmeübertragungsflächen werden aufgefüllt. Eine tatsächliche Kontaktfläche zwischen der Temperiereinrichtung und den Batteriemodulen wird maximiert. Der Gap Filler vernetzt nach dem Abdrücken, kann aber auch im ausgehärteten Zustand elastische Eigenschaften behalten.

### Beschreibung der Erfindung

Eine Aufgabe der Erfindung ist es daher, unter Einsatz konstruktiv möglichst einfacher Mittel ein verbessertes Batteriemodul für eine Traktionsbatterie eines Elektrofahrzeugs, eine verbesserte Traktionsbatterie für ein Elektrofahrzeug und ein verbessertes Verfahren zum Herstellen einer solchen Traktionsbatterie bereitzustellen. Eine Verbesserung kann hierbei beispielsweise eine vergrößerte Kontaktfläche zum Übertragen von Abwärme des Batteriemoduls sowie einen vereinfachten Toleranzausgleich betreffen.

Die Aufgabe wird durch die Gegenstände der unabhängigen Ansprüche gelöst. Vorteilhafte Weiterbildungen der Erfindung sind in den abhängigen Ansprüchen, der Beschreibung und den begleitenden Figuren angegeben. Insbesondere können die unabhängigen Ansprüche einer Anspruchskategorie auch analog zu den abhängigen Ansprüchen einer anderen Anspruchskategorie weitergebildet sein.

Eine Wärmeübertragungsfläche eines Batteriemoduls kann ohne ein zusätzliches toleranzausgleichendes Wärmeleitmaterial nur eine geringe tatsächliche Kontaktfläche zu einer Temperiereinrichtung einer Traktionsbatterie erreichen. Bauteiltoleranzen, Unebenheiten und Oberflächenstrukturen erschweren einen großflächigen metallischen Kontakt. Durch die geringe Kontaktfläche kann ein hoher Wärmeübergangswiderstand resultieren.

Bei dem hier vorgestellten Ansatz wird eine unter relativ geringer Krafteinwirkung verformbare Wärmeübertragungsfläche vorgestellt, die aus plastisch und/oder elastisch verformbaren Endbereichen von Wärmeleitblechen des Batteriemoduls besteht. Die Endbereiche weisen einen konstruktiv vorgesehenen Federweg beziehungsweise Deformationsweg auf. Der Federweg beziehungsweise Deformationsweg wird durch eine Schrägstellung der Endbereiche gegenüber einer Bezugsebene der Wärmeübertragungsfläche erreicht. Die Bezugsebene verläuft hierbei im Wesentlichen parallel zu einer zu dem Batteriemodul gerichteten Oberfläche der Temperiereinrichtung. Die vor der Montage schrägstehenden Endbereiche werden bei der Montage durch eine Anpresskraft, also beispielsweise durch eine Masse des Batteriemoduls, gegen die Temperiereinrichtung gepresst und schmiegen sich so an die Temperiereinrichtung an, wodurch ein verbesserter direkter metallischer Kontakt zwischen den Endbereichen der Wärmeleitbleche und der Temperiereinrichtung entsteht. Die verformbaren Endbereiche gleichen dabei die Bauteiltoleranzen bzw. Unebenheiten zumindest teilweise aus. Durch das Anschmiegen der Endbereiche kann eine Schichtdicke von zusätzlich zwischen die Wärmeübertragungsfläche und die Temperiereinrichtung eingebrachtem Wärmeleitmaterial minimiert werden und so der Wärmeübergangswiderstand weiter reduziert werden.

Es wird ein Batteriemodul für eine Traktionsbatterie eines Elektrofahrzeugs vorgeschlagen, wobei das Batteriemodul zumindest ein zwischen zwei Zellen des Batteriemoduls angeordnetes Wärmeleitblech aufweist, wobei ein Zentralbereich des Wärmeleitblechs in einem Zwischenraum zwischen den Zellen entlang einer Haupterstreckungsebene des Wärmeleitblechs verläuft und ein außerhalb des Zwischenraums zwischen den Zellen angeordneter Endbereich des Wärmeleitblechs quer zu der Haupterstreckungsebene ausgerichtet ist und eine verformbare Wärmeübertragungsfläche des Batteriemoduls ausbildet, wobei der Endbereich in einem spitzen Winkel zu einer senkrecht zu der Haupterstreckungsebene verlaufenden Bezugsebene der Wärmeübertragungsfläche ausgerichtet ist.

Weiterhin wird eine Traktionsbatterie für ein Elektrofahrzeug vorgeschlagen, wobei die Traktionsbatterie eine Temperiereinrichtung und zumindest ein Batteriemodul gemäß dem hier vorgestellten Ansatz aufweist, wobei die Wärmeübertragungsfläche mit einer Setzkraft gegen die Temperiereinrichtung gepresst ist, wobei die Wärmeübertragungsfläche durch die Setzkraft zumindest anteilig verformt ist und zumindest anteilig flächig an der Temperiereinrichtung anliegt.

Ferner wird ein Verfahren zum Herstellen einer Traktionsbatterie gemäß dem hier vorgestellten Ansatz vorgeschlagen, wobei eine Wärmeübertragungsfläche eines Batteriemoduls gemäß dem hier vorgestellten Ansatz mit einer Setzkraft gegen die Temperiereinrichtung gepresst wird, wobei die Wärmeübertragungsfläche durch die Setzkraft zumindest anteilig verformt wird und zumindest anteilig flächig an die Temperiereinrichtung angelegt wird.

Unter einer Traktionsbatterie kann ein Energiespeicher für ein elektrisch angetriebenes Fahrzeug verstanden werden. Die Traktionsbatterie kann ein Gehäuse aufweisen, das Komponenten der Traktionsbatterie umschließt und vor mechanischen Einflüssen und Umwelteinflüssen schützt. Das Gehäuse kann innenliegende Versteifungselemente aufweisen. Die Traktionsbatterie kann modular aufgebaut sein. Die Traktionsbatterie kann beispielsweise an einer Bodengruppe des Fahrzeugs befestigt sein.

Eine Temperiereinrichtung kann Bestandteil des Gehäuses sein. Die Temperiereinrichtung kann insbesondere in einen Boden der Traktionsbatterie integriert sein. Die Temperiereinrichtung kann als Kühlplatte bezeichnet werden. Die Temperiereinrichtung kann ein Wärmetauscher zum Zuführen und Abführen von Wärmeenergie sein. Die Temperiereinrichtung kann ein Fluid für den Wärmetransport enthalten. Insbesondere kann die Temperiereinrichtung eine Wärmetransportflüssigkeit enthalten. Die Temperiereinrichtung kann durch eine Klimaanlage des Fahrzeugs versorgt werden.

Die Traktionsbatterie kann mehrere Batteriemodule aufweisen. Die Batteriemodule können zwischen den Versteifungselementen der Traktionsbatterie angeordnet werden. Ein Batteriemodul kann mehrere Zellen beziehungsweise Batteriezellen zusammenfassen. Die Zellen können innerhalb des Batteriemoduls elektrisch verschaltet sein. Das Batteriemodul kann ebenso ein Gehäuse aufweisen, das die Zellen umschließt. Die Batteriemodule können innerhalb der Traktionsbatterie elektrisch verschaltet sein.

Das Batteriemodul kann zumindest eine thermisch mit den Zellen gekoppelte Wärmeübertragungsfläche aufweisen. Die Wärmeübertragungsfläche kann insbesondere eine Bodenfläche des Batteriemoduls sein. Die Wärmeübertragungsfläche kann aus Endbereichen von zwischen den Zellen angeordneten Wärmeleitblechen bestehen. Die Wärmeübertragungsfläche kann bei einer entsprechenden Ausrichtung der Zellen und der Temperiereinrichtung auch an einer Seitenfläche des Batteriemoduls angeordnet sein.

Die Wärmeübertragungsfläche kann bei der Herstellung der Traktionsbatterie unter Verwendung von pastösem Wärmeleitmaterial thermisch mit der Temperiereinrichtung gekoppelt werden. Das Wärmeleitmaterial kann in dem pastösen beziehungsweise pastenartigen Zustand verarbeitet werden und kann nach dem Verarbeiten vernetzen beziehungsweise aushärten. Das pastöse Wärmeleitmaterial kann als Gap Filler bezeichnet werden. Das pastöse Wärmeleitmaterial kann einen geringen Wärmewiderstand aufweisen. Das Wärmeleitmaterial kann elektrisch isolierend sein. Das Wärmeleitmaterial kann einen keramischen Füllstoff aufweisen. Das pastöse Wärmeleitmaterial kann unter Druckeinwirkung viskose Eigenschaften aufweisen, d.h. fließfähig sein.

Bei der Herstellung der Traktionsbatterie wird die Wärmeübertragungsfläche auf die Temperiereinrichtung aufgesetzt. Die Endbereiche können um weniger als 90°, beispielsweise um einen Winkel von zwischen 50° und 89°, vorzugsweise zwischen 60° und 85°, zu der Haupterstreckungsebene gebogen bzw. ausgerichtet sein. Der Endbereich eines Wärmeleitblechs kann somit in einem spitzen Winkel in Bezug auf eine Bezugsebene der Wärmeübertragungsfläche ausgerichtet sein, wobei die Bezugsebene senkrecht zu der Haupterstreckungsebene des Wärmeleitblechs verläuft. Die Bezugsebene kann hierbei parallel zu einer Stirnseite zweier benachbarter Zellen sein, wobei das Wärmeleitblech mit seinem Endbereich über diese Stirnfläche hinausragt. Das Wärmeleitblech kann somit an einem Übergang zwischen dem Zentralbereich und dem Endbereich einen Knick aufweisen. Die Endbereiche können eben sein. Die Endbereiche können von den Zellen wegweisen, d.h ein freies Ende eines Endbereichs kann weiter von der zugehörigen Zelle entfernt sein als ein an den Zentralbereich angrenzender Teil des Endbereichs. Der Endbereich kann auch näherungsweise parallel zu der Bezugsebene ausgerichtet sein.

Freie Enden der Endbereiche können bei einer Batteriemontage dadurch zuerst auf der Temperiereinrichtung aufsetzen. Das Batteriemodul wird dann mit einer Setzkraft gegen die Temperiereinrichtung gepresst. Beim Anpressen verbiegen sich die Endbereiche von den freien Enden her zumindest anteilig um einen konstruktiv vorgesehenen Federweg beziehungsweise Deformationsweg und passen sich zumindest teilweise an eine Kontur der Temperiereinrichtung an. Der Federweg beziehungsweise Deformationsweg muss bei der Verformung nicht ausgeschöpft werden. Durch die Verformung können die Endbereiche zumindest teilweise eine parallele Lage zu einer Oberfläche der Temperiereinrichtung erreichen.

Zwischen der Wärmeübertragungsfläche und der Temperiereinrichtung befindliches Wärmeleitmaterial kann beim Anpressen seitlich verdrängt werden. Durch den spitzen Winkel der Endbereiche kann das Wärmeleitmaterial in eine vorgegebene Richtung verdrängt werden, auch eine parallele Anordnung der Flächen ist möglich Überschüssiges Wärmeleitmaterial quillt seitlich aus einem Spalt zwischen der Wärmeübertragungsfläche und der Temperiereinrichtung heraus. Dabei kann das Wärmeleitmaterial beim Fließen Fertigungstoleranzen der Endbereiche und der Oberfläche der Temperiereinrichtung ausgleichen. Weiterhin kann das Wärmeleitmaterial eine Hohlräume oder Spalte der Endbereiche und der Oberfläche der Temperiereinrichtung füllen. Dadurch kann ein vollflächiger Kontakt zwischen dem Wärmeleitmaterial und der Wärmeübertragungsfläche beziehungsweise dem Wärmeleitmaterial und der Temperiereinrichtung entstehen. Über das Wärmeleitmaterial und die elastischen Endbereiche kann sich ein vollflächiger wärmeleitender Kontakt zwischen der Wärmeübertragungsfläche und der Temperiereinrichtung ergeben.

Der Endbereich kann geschlitzt ausgeführt sein und zumindest zwei verformbare Teilflächen der Wärmeübergangsfläche ausbilden. Die Endbereiche können in viele Teilflächen unterteilt sein. Durch dazwischenliegende Schlitze kann sich jede Teilfläche individuell an die Temperiereinrichtung verformen und anlegen. Die Teilfläche kann sich entsprechend einer anteiligen Presskraft elastisch und/oder plastisch verformen. Die Teilflächen können sich der Kontur der Temperiereinrichtung anpassen.

Benachbarte Teilflächen des Endbereichs können in entgegengesetzte Richtungen gebogen sein. Insbesondere können in beide Richtungen gleich viele Teilflächen gebogen sein. Durch die Biegung in die entgegengesetzten Richtungen können sich die durch das Verformen der Teilflächen in das Wärmeleitblech eingeleiteten Drehmomente gegenseitig im Wesentlichen aufheben. Die entgegengesetzt ausgerichteten Teilflächen können die Wärme gleichmäßig verteilt zur Temperiereinrichtung leiten.

In zumindest zwei Zwischenräumen kann je ein Wärmeleitblech angeordnet sein. Einander zugewandte Teilflächen benachbarter Wärmeleitbleche können seitlich versetzt zueinander angeordnet sein. Durch die versetzte Anordnung kann eine regelmäßige Matrix von Teilflächen der Wärmeübertragungsfläche erreicht werden. Die Setzkraft kann so gleichmäßig in die Temperiereinrichtung eingeleitet werden. Wenn in allen Zwischenräumen Wärmeleitbleche angeordnet sind, können die Teilflächen benachbarter Endbereiche abwechselnd in einer Reihe nebeneinander angeordnet sein. Wenn alle zwei Zwischenräume ein Wärmeleitblech angeordnet ist, können die Teilflächen schachbrettartig angeordnet sein.

Benachbarte Teilflächen des Endbereichs können alternativ in die gleiche Richtung gebogen sein. Durch die einheitliche Biegerichtung kann der Endbereich einfach und kostengünstig abgekantet werden.

Zwischen zwei Wärmeleitblechen einer Wärmeübertragungsfläche können je zwei Zellen angeordnet sein. Mit anderen Worten kann alle zwei Zwischenräume ein Wärmeleitblech angeordnet sein. So weist jede Zelle zumindest an einer Flachseite direkten Kontakt zu einem Wärmeleitblech auf. Wenn das Batteriemodul auf zwei Seiten Wärmeübertragungsflächen aufweist, können die Wärmeleitbleche der verschiedenen Wärmeübertragungsflächen jeweils abwechselnd zwischen den Zellen angeordnet sein.

Die Endbereiche der zwei Wärmeleitbleche können in entgegengesetzte Richtungen gebogen sein. Die Endbereiche können Rippen ausbilden. Zwischen den Rippen können Kavitäten zum Aufnehmen von überschüssigem Wärmeleitmaterial angeordnet sein.

Die Wärmeübertragungsfläche kann ausschließlich elastisch sein. Die Wärmeübertragungsfläche kann dauerelastisch sein. Das heißt, die die Wärmeübertragungsfläche ausbildenden Endbereiche der Wärmeleitbleche können derart elastisch deformierbar sein, dass diese ohne plastische Verformung bis in eine Konfiguration, in der ein Endbereich an einer Stirnfläche einer der Zellen anliegt, verformt werden können. Dementsprechend können die Endbereiche etwaige Bewegungen eines Batteriemoduls relativ beispielsweise zu der Temperiereinrichtung der Traktionsbatterie abfedern. So können die Endbereiche als Federung des Batteriemoduls dienen und eine Übertragung von Schlägen dämpfen.

### Kurze Figurenbeschreibung

Nachfolgend wird ein vorteilhaftes Ausführungsbeispiel der Erfindung unter Bezugnahme auf die begleitenden Figuren erläutert. Es zeigt:
- Fig. 1: eine Schnittdarstellung einer Traktionsbatterie gemäß einem Ausführungsbeispiel;
- Fig. 2: ein Detail eines Batteriemoduls gemäß einem Ausführungsbeispiel; und
- Fig. 3: eine Darstellung eines Batteriemoduls gemäß einem Ausführungsbeispiel.

Die Figuren sind lediglich schematische Darstellungen und dienen nur der Erläuterung der Erfindung. Gleiche oder gleichwirkende Elemente sind durchgängig mit den gleichen Bezugszeichen versehen.

### Detaillierte Beschreibung

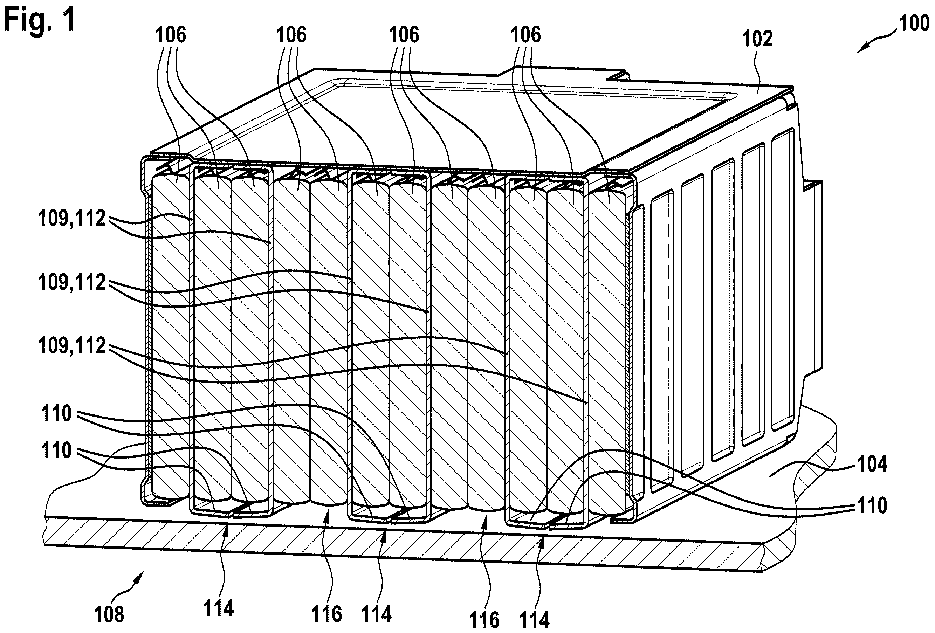

Fig. 1 zeigt eine Schnittdarstellung einer Traktionsbatterie 100 gemäß einem Ausführungsbeispiel. Die Traktionsbatterie 100 kann mehrere Batteriemodule 102 aufweisen. Hier ist eines der Batteriemodule 102 geschnitten dargestellt. Die Batteriemodule 102 können in der Traktionsbatterie 100 parallel und/oder in Reihe verschaltet sein. Dazu werden die einzelnen Batteriemodule 102 in ein Gehäuse beziehungsweise einen Rahmen der Traktionsbatterie 100 eingesetzt und elektrisch miteinander verbunden. Zum Temperieren der Batteriemodule 102 weist die Traktionsbatterie 100 eine Temperiereinrichtung 104 auf, die beispielsweise in einem Boden des Gehäuses angeordnet sein kann oder den Boden der Traktionsbatterie 100 ausbilden kann. Die Temperiereinrichtung 104 kann insbesondere dazu verwendet werden, die Batteriemodule 102 zu kühlen. Bei niedrigen Temperaturen kann die Temperiereinrichtung 104 auch dazu verwendet werden, die Batteriemodule 102 zu heizen.

Das Batteriemodul 102 weist mehrere Pouchzellen oder prismatische Zellen 106 auf. Die Zellen 106 sind Flachseite an Flachseite nebeneinander innerhalb eines Gehäuses des Batteriemoduls 102 angeordnet. Die Flachseiten der Zellen 106 sind senkrecht zu einer Wärmeübertragungsfläche 108 des Batteriemoduls 102 ausgerichtet. Die Wärmeübertragungsfläche 108 ist hier an einem Boden des Gehäuses angeordnet. Über die Wärmeübertragungsfläche 108 ist das Batteriemodul 102 thermisch mit der Temperiereinrichtung 104 gekoppelt. Das Batteriemodul 102 kann unter Verwendung eines hier nicht dargestellten Wärmeleitmaterials mit der Temperiereinrichtung 104 gekoppelt werden.

Alternativ können die Zellen 106 auch liegend übereinandergestapelt sein. Dann kann das Batteriemodul 102 zumindest eine seitliche Wärmeübertragungsfläche 108 aufweisen. Je nach Gestaltung der Temperiereinrichtung 104 kann das Batteriemodul 102 auch mehrere an verschiedenen Seiten des Batteriemoduls 102 angeordnete Wärmeübertragungsflächen 108 aufweisen.

Die Wärmeübertragungsfläche 108 ist bei dem hier vorgestellten Ansatz durch abgekantete Endbereiche 110 von Wärmeleitblechen 112 des Batteriemoduls 102 ausgebildet. Zentralbereiche 109 der Wärmeleitbleche 112 verlaufen dabei in einem Zwischenraum zwischen benachbarten Zellen 106 und erstrecken sich entlang einer Haupterstreckungsebene des jeweiligen Wärmeleitblechs 112. Die Endbereiche 110 sind dabei nicht senkrecht zu den Zentralbereichen 109 der Wärmeleitbleche 112 gebogen, sondern verlaufen in einem von 90° verschiedenen, d.h. schrägen Winkel. Die Endbereiche 110 sind somit in einem spitzen Winkel zu einer senkrecht zu der Haupterstreckungsebene der Wärmeleitbleche 112 verlaufenden Bezugsebene der Wärmeübertragungsfläche 108 ausgerichtet. Die Endbereiche 110 ragen dabei über Seitenteile des Batteriemoduls 102 hinaus. Mit anderen Worten stehen die Seitenteile hinter der Bezugsebene zurück.

Durch den spitzen Winkel treffen die Endbereiche 110 beim Aufsetzen des Batteriemoduls 102 mit einer Kante zuerst auf die Temperiereinrichtung 104. Durch ein Gewicht des Batteriemoduls 102 und/oder eine Setzkraft werden die Endbereiche 110 verformt und passen sich an die Temperiereinrichtung 104 an. Die Endbereiche 110 gleichen dabei Form- und Lagetoleranzen der Temperiereinrichtung 104 und des Batteriemoduls 102 aus. Die Endbereiche 110 sind im Wesentlichen als Biegefedern ausgebildet und verformen sich in jedem Fall zumindest geringfügig elastisch. Die Endbereiche 110 können sich auch anteilig plastisch verformen, wenn ein aus dem Gewicht und/oder der Setzkraft resultierendes Biegemoment größer als ein Biegewiderstandsmoment der Endbereiche 110 ist. Es ist auch möglich, dass die Endbereiche parallel angeordnet sind.

Durch die Verformung der Endbereiche 110 wird eine Kontaktfläche zwischen der Wärmeübertragungsfläche 108 und der Temperiereinrichtung 104 vergrößert.

In einem Ausführungsbeispiel sind zwischen zwei Wärmeleitblechen 112 je zwei Zellen 106 angeordnet. Zwischen jeder zweiten Zelle 106 ist also ein Wärmeleitblech 112 angeordnet. Die Endbereiche 110 von benachbarten Wärmeleitblechen 112 sind dabei in entgegengesetzte Richtungen abgekantet. So sind jeweils die Kanten von zwei Endbereichen 110 aufeinander gerichtet und diese Endbereiche 110 bilden eine Rippe 114 der Wärmeübertragungsfläche 108 aus. Die abgekanteten Endbereiche 110 sind dabei kürzer, als eine Dicke der Zellen, um eine Berührung zwischen den Kanten zu verhindern. Die Kanten sind dabei beidseitig einer Mitte der Rippe 114 angeordnet. Die Rippe 114 weist in der Mitte einen Spalt zwischen den Kanten auf. Zwischen zwei Rippen 114 ist dabei je eine Kavität 116 zum Aufnehmen von überschüssigem Wärmeleitmaterial angeordnet.

In einem alternativen Ausführungsbeispiel sind zwischen allen Zellen 106 des Batteriemoduls 102 Wärmeleitbleche 112 angeordnet. So können die Zellen von beiden Flachseiten her temperiert werden. Die Endbereiche 110 sind dabei jeweils in die gleiche Richtung abgekantet, um Kollisionen zu vermeiden.

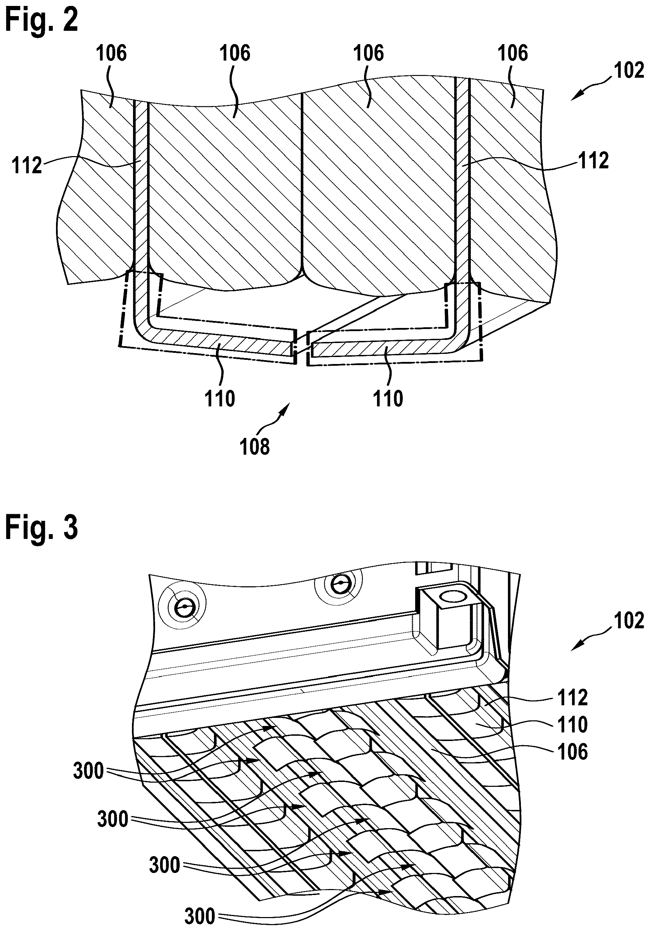

Fig. 2 zeigt ein Detail eines Batteriemoduls 102 gemäß einem Ausführungsbeispiel. Das Batteriemodul entspricht dabei im Wesentlichen dem Batteriemodul in Fig. 1. Hier sind zwei aus den Zwischenräumen zwischen den Zellen 106 herausragende und abgekantete Endbereiche 110 von zwei Wärmeleitblechen 112 dargestellt. Die den Zwischenräumen herausragenden Teile der Wärmeleitbleche 112 bilden einen elastischen und/oder verformbaren Bereich aus, der beim Aufsetzen des Batteriemoduls 102 auf die Temperiereinrichtung verformt werden kann. Die schräg zu der Bezugsebene ausgerichteten Endbereiche 110 definieren dabei einen Federweg beziehungsweise Deformationsweg für die Verformung.

Fig. 3 zeigt eine Darstellung eines Batteriemoduls 102 gemäß einem Ausführungsbeispiel. Das Batteriemodul entspricht dabei im Wesentlichen dem Batteriemodul in Fig. 1 und 2. Hier ist die Wärmeübertragungsfläche 108 des Batteriemoduls 102 dargestellt. Die Endbereiche 110 sind hier geschlitzt ausgeführt. Die Schlitze unterteilen die Endbereiche 110 in individuell verformbare Teilflächen 300. Die Teilflächen können sich beim Aufsetzen entsprechend des auf sie wirkenden Anteils der Setzkraft verformen. Damit kann sich die Wärmeübertragungsfläche 108 gut an eine Kontur der Temperiereinrichtung anpassen.

In einem Ausführungsbeispiel sind die Teilflächen 300 eines Wärmeleitblechs 112 jeweils in die gleiche Richtung abgekantet. So kann das Wärmeleitblech 112 einfach hergestellt werden. Die Wärmeleitbleche 112 mit ihren Endbereichen 110 bilden wie in Fig. 1 Rippen 114 aus.

In einem alternativen Ausführungsbeispiel sind die Teilflächen unter Beibehaltung des spitzen Winkels zu der Bezugsebene abwechselnd in entgegengesetzte Richtungen abgekantet. Die Teilflächen 300 sind dabei jeweils um weniger als 90 Grad abgekantet. Freie Enden der Teilflächen sind so jeweils von den Zellen 106 weg gerichtet. Durch die abwechselnde Ausrichtung der Teilflächen 300 heben sich beim Aufsetzen auf die Temperiereinrichtung eingeleitete Biegemomente gegenseitig auf. So kann eine Druckbelastung der an das Wärmeleitblech 112 angrenzenden Zellen 106 verringert werden.

In einem Ausführungsbeispiel sind die Teilflächen 300 benachbarter Wärmeleitbleche 112 seitlich versetzt zueinander angeordnet. Die Wärmeübertragungsfläche 108 ist so gleichmäßig über den Boden des Batteriemoduls 102 angeordnet. Die Teilflächen 300 sind in einem regelmäßigen Muster angeordnet.

Mit anderen Worten wird ein Batteriemodul mit einem Heatspreader mit einem integrierten Toleranzausgleich vorgestellt.

Zur Herstellung einer Traktionsbatterie werden Zellmodule in einen Rahmen oder ein Batteriegehäuse eingebracht und dabei thermisch an einen Kühlelement (z.B. Kühlplatte) angebunden. Geometrische Toleranzen und Ebenheiten beider Bauteile können eine gleichmäßige Berührungsfläche und damit eine gleichmäßige thermische Anbindung verhindern.

Bei dem hier vorgestellten Ansatz werden daher Wärmeleitbleche eingesetzt, die einen elastischen oder verformbaren Bereich zum Kühlelement aufweisen. Der elastische oder verformbare Bereich wird beim Setzen der Zellmodule verformt und schafft so eine gleichmäßige thermische Kontaktfläche.

Zusätzlich können pastöse oder verformbare TIM-Materialien (Thermal Interphase Material) wie Gapfiller oder Gappads verwendet werden. Durch den hier vorgestellten Ansatz kann der Einsatz von Gapfiller vermieden oder stark reduziert werden, was eine Kosteneinsparung ermöglicht.

Die elastischen oder verformbaren Bereiche ermöglichen also die Vermeidung von zusätzlichen Materialien, eine Vereinfachung des Produktionsablaufs und eine Steigerung der thermischen Performanz von Zellmodulen.

Das einzelne Wärmeleitblech in einem Zellmodul weist an mindestens einer Seite einen elastischen oder verformbaren Bereich auf. Das Zellmodul besteht beispielsweise aus Pouchzellen, die in thermischen Kontakt zum Wärmeleitblech stehen. Im Zusammenbau steht das Zellmodul im thermischen Kontakt zu einer Kühlstruktur. Der elastische oder verformbare Bereich wird bei der Montage des Moduls an die Kühlstruktur deformiert. Der elastische Bereich kann so strukturiert sein, dass Biegefinger entstehen, die eine definierte Biegezone besitzen und so eine definierte Kontaktfläche zu dem Kühlelement sicherstellen. Das Zellmodul kann insbesondere in einer Batterie für ein Fahrzeug eingesetzt werden.

Da es sich bei der vorhergehend detailliert beschriebenen Vorrichtungen und Verfahren um Ausführungsbeispiele handelt, können sie in üblicher Weise vom Fachmann in einem weiten Umfang modifiziert werden, ohne den Bereich der Erfindung zu verlassen. Insbesondere sind die mechanischen Anordnungen und die Größenverhältnisse der einzelnen Elemente zueinander lediglich beispielhaft.

### BEZUGSZEICHENLISTE

- 100: Traktionsbatterie
- 102: Batteriemodul
- 104: Temperiereinrichtung
- 106: Zelle
- 108: Wärmeübertragungsfläche
- 109: Zentralbereich
- 110: Endbereich
- 112: Wärmeleitblech
- 114: Rippe
- 116: Kavität

- 300: Teilfläche

## Patentansprüche

1. Batteriemodul (102) für eine Traktionsbatterie (100) eines Elektrofahrzeugs, wobei das Batteriemodul (102) zumindest ein zwischen zwei Zellen (106) des Batteriemoduls (102) angeordnetes Wärmeleitblech (112) aufweist, wobei ein Zentralbereich (109) des Wärmeleitblechs (112) in einem Zwischenraum zwischen den Zellen (106) entlang einer Haupterstreckungsebene des Wärmeleitblechs (112) verläuft und ein außerhalb des Zwischenraums angeordneter Endbereich (110) des Wärmeleitblechs (112) quer zu der Haupterstreckungsebene ausgerichtet ist und eine verformbare Wärmeübertragungsfläche (108) des Batteriemoduls (102) ausbildet, wobei der Endbereich (110) in einem spitzen Winkel zu einer senkrecht zu der Haupterstreckungsebene verlaufenden Bezugsebene der Wärmeübertragungsfläche (108) ausgerichtet ist.

2. Batteriemodul (102) gemäß Anspruch 1, bei dem der Endbereich (110) geschlitzt ausgeführt ist und zumindest zwei verformbare Teilflächen (300) der Wärmeübergangsfläche (108) ausbildet.

3. Batteriemodul (102) gemäß Anspruch 2, bei dem benachbarte Teilflächen (300) des Endbereichs (110) in entgegengesetzte Richtungen gebogen sind.

4. Batteriemodul (102) gemäß Anspruch 3, bei dem in zumindest zwei Zwischenräumen je ein Wärmeleitblech (112) angeordnet ist, wobei einander zugewandte Teilflächen (300) benachbarter Wärmeleitbleche (112) seitlich versetzt zueinander angeordnet sind.

5. Batteriemodul (102) gemäß Anspruch 2, bei dem benachbarte Teilflächen (300) des Endbereichs (110) in die gleiche Richtung gebogen sind.

6. Batteriemodul gemäß einem der vorhergehenden Ansprüche, bei dem zwischen zwei Wärmeleitblechen (112) je zwei Zellen (106) angeordnet sind.

7. Batteriemodul (102) gemäß Anspruch 5 und 6, bei dem die Endbereiche (110) der zwei Wärmeleitbleche (112) in entgegengesetzte Richtungen gebogen sind.

8. Batteriemodul (102) gemäß einem der vorhergehenden Ansprüche, bei dem der die Wärmeübertragungsfläche (108) ausbildende Endbereich (110) bis in eine Konfiguration, in der der Endbereich (110) an einer Stirnfläche einer der Zellen (106) anliegt, elastisch deformierbar ist.

9. Traktionsbatterie (100) für ein Elektrofahrzeug, wobei die Traktionsbatterie (100) eine Temperiereinrichtung (104) und zumindest ein Batteriemodul (102) gemäß einem der Ansprüche 1 bis 8 aufweist, wobei die Wärmeübertragungsfläche (108) mit einer Setzkraft gegen die Temperiereinrichtung (104) gepresst ist, wobei die Wärmeübertragungsfläche (108) durch die Setzkraft zumindest anteilig verformt ist und zumindest anteilig flächig an der Temperiereinrichtung (104) anliegt.

10. Verfahren zum Herstellen einer Traktionsbatterie (100) gemäß Anspruch 9, wobei eine Wärmeübertragungsfläche (108) eines Batteriemoduls (102) gemäß einem der Ansprüche 1 bis 8 mit einer Setzkraft gegen die Temperiereinrichtung (104) gepresst wird, wobei die Wärmeübertragungsfläche (108) durch die Setzkraft zumindest anteilig verformt wird und zumindest anteilig flächig an die Temperiereinrichtung (104) angelegt wird.
